# EUROPEAN PATENT APPLICATION

(11) **EP 4 628 671 A1**
(43) Date of publication of application: **08.10.2025**
(21) Application number: 24168123.8
(22) Date of filing: 02.04.2024
(51) Int. Cl.: E04C 2/04, B32B 13/02, B32B 13/04, C04B 38/10, E04B 1/80, E04C 2/284, B32B 5/18, C04B 24/00, C04B 28/00, E04C 2/34

(54) **SANDWICH PANELS FILLED WITH MINERAL FOAM, THEIR MANUFACTURE AND USE**

(71) Applicant: Sika Technology AG, 6340 Baar (CH)
(72) Inventor: LANGENEGGER, Marcel, 8908 Hedingen (CH); MEIER, Yves, 8406 Winterthur (CH)
(74) Representative: Sika Patent Attorneys

(57) **Abstract**

The present invention relates to the manufacture of sandwich panels (21) wherein a cavity (25) is formed by bonding a first construction board (22), a second construction board (23), and at least one spacer element (24) with an adhesive and is subsequently filled with a mineral foam. The present invention also relates to the use of sandwich elements (21) thus manufactured as thermal insulation panel, acoustic insulation panel, fire protection panel, and/or cover board.

## Description

### Technical Field

The present invention relates to bonded sandwich panels comprising a cavity filled with mineral foam, their manufacture and use, in particular their use for building construction.

### Background of the invention

Sandwich panels used for construction or other purposes are well known. Sandwich panels consist of at least two boards forming opposing surfaces and typically having a cavity in between. In commercially available sandwich panels the cavity between boards is often filled with a core made of organic foam such as polyisocyanurate foam or polyurethane foam, for example to increase thermal and/or acoustic insulation. However, such organic foams typically are flammable and can be a severe safety issue. Mineral wool and other materials can be used for some applications as a replacement of organics. For example, EP 2 374 959 (Knauf Perlite GmbH) discloses a sandwich panel where the cavity is filled by expanded perlite.

It is also well known that mineral foams can be used as insulation material, e.g., as a thermal insulator, acoustic insulator or acoustic absorber as well as construction material with a low density. In contrast to foams based on organic polymers, mineral foams are non-flammable.

Many methods are known from the prior art to produce mineral foams. For example, WO 01/70647 (Windsor Technologies Ltd) discloses a method where a dry mineral binder is added to a pre-generated aqueous foam to obtain a mineral foam upon drying. For example, WO 2019/038105 (BASF SE) discloses a method where a cement slurry and an aqueous foam are separately prepared and then mixed to obtain a mineral foam upon drying. For example, WO 2018/162381 (Construction Research & Technology GmbH, DeCavis AG) discloses a method where a mineral foam is obtained by chemical foaming of a mineral binder slurry.

EP 4 393 809 (Sika Technology AG) discloses a sandwich panel where a mineral foam is sandwiched between two layers of cementitious mortar. The sandwich panels of EP 4 393 809 can be used as a passive fire barrier.

Sandwich panels often are bonded, i.e. joined by an adhesive. Especially multi-material sandwich panels, i.e. panels made from two or more different materials, are bonded by adhesives. This allows to obtain improved properties of the sandwich panel such as improved overall strength and durability. For example, different thermal expansion of materials can be accommodated by an adhesive. Also, adhesives can improve the damping effect of impact and/or vibrations. However, the use of adhesives, which typically are organic materials, poses new challenges in terms of flammability.

There is a constant need for improved sandwich panels, especially for thermal insulation, acoustic insulation, and/or fire protection in construction applications. Such sandwich panels should be easy to manufacture, have good insulating properties, and be non-flammable. There is in particular a need for solutions to increase the fire resistance of multi-material sandwich panels, i.e. sandwich panels that are made of more than one material and are bonded by adhesives.

### Summary of the invention

It is an object of the present invention to provide improved non-flammable, bonded sandwich panels that provide efficient fire protection. It is also an object of the present invention to provide methods for the manufacture of such sandwich panels. The sandwich panels are bonded by an adhesive and optionally are multi-material sandwich panels.

It has been found that these and other objectives are solved by a bonded sandwich panel comprising a cavity filled with mineral foam. The expression "bonded" within the present context relates to materials joined by an adhesive.

The mineral foam combines one or more of the following advantages:
▪ it is non-flammable, thereby improving safety;
▪ it protects the adhesive between elements, especially between a supporting structure or frame and sandwich elements of the present invention;
▪ it improves the fire resistance of a construction comprising elements assembled with an adhesive;
▪ it has a low thermal conductivity, thereby improving thermal insulation properties;
▪ it has good acoustic dampening properties, thereby improving acoustic insulation properties;
▪ it has low density, thereby adding less weight.

In particular, a sandwich panel of the present invention has a higher resistance to flames or has improved non-flammable properties, as compared to a sandwich panel comprising a cavity filled with organic resins or with mineral wool. The present invention is in particular useful for fully or partially bonded sandwich panels in drywall construction.

It is therefore possible, to manufacture improved sandwich panels by a method as claimed in claim 1.

Other aspects of the present invention are the subject matter of independent claims. Preferred embodiments are the subject matter of dependent claims.

### Detailed Ways

In a first aspect the present invention relates to a method for the manufacture of a sandwich panel (21), said method comprising the steps of
(i) forming at least one cavity (25) delimited by a first surface (22.1) of a first construction board (22), a second surface (23.1) of a second construction board (23), and a at least one third surface (24a) of at least one spacer element (24.1), whereby the at least one cavity (25) is formed by joining the first construction board (22), the second construction board (23), and the at least one spacer element (24.1) with an adhesive, and
(ii) completely filling the at least one cavity (25) formed with a mineral foam.

Construction boards within the present context are solid boards of a material typically used in construction. Especially, construction boards are metal boards, fiber cement boards, gypsum plasterboards, gypsum fiberboards, or wood boards. According to embodiments, in a method of the present invention said first construction board (22) and second construction board (23) independently of each other are selected from metal boards, fiber cement board, gypsum plasterboards, gypsum fiberboards, or wood boards. It is thereby possible, that a sandwich panel (21) of the present invention comprises a first and a second construction board (22,23) of the same material. For example, it is possible that the first and the second construction board (22,23) both are selected from metal boards, or fiber cement boards, or gypsum plasterboards, or gypsum fiberboards, or wood boards. It is, however, also possible that the sandwich panel (21) of the present invention comprises a first and a second construction board (22,23) of different material. For example, it is possible that the first construction board (22) is a metal board and the second construction board (23) is a fiber cement board, or that the first construction board (22) is a fiber cement board and the second construction board (23) is a gypsum board, or that the first construction board (22) is a metal board and the second construction board (23) is a gypsum board, or that the first construction board (22) is a fiber cement board and the second construction board (23) is a wood board, or that the first construction board (22) is a gypsum board and the second construction board (23) is a wood board, or that the first construction board (22) is a metal board and the second construction board (23) is a wood board.

Construction boards within the present context have a plate-like form and are flat. This means that they extend more within two directions and much less in the third direction. For example, construction boards (22,23) of the present invention have a width and length of several centimeters to a few meters and a thickness of a few millimeters to few centimeters. Typical dimension are, for example, a length and width between 100 - 300 cm and a thickness of 5 - 75 mm. However, other dimensions are possible as well. Preferably, construction boards (22,23) of the present invention are rectangular.

Preferably, at least the first surface (22.1) of the first construction board (22) and the second surface (23.1) of the second construction board (23) are flat.

According to preferred embodiments, in a method of the present invention the first construction board (22) and second construction board (23) are arranged such that said first surface (22.1) and said second surface (23.1) are arranged plane parallel with each other.

The at least one spacer element (24) is not particularly limited in composition or shape. For example, the spacer element (24) can be made of metal, especially steel, or of a thermoplastic or duroplastic material. The at least one spacer element (24) can be structural or non-structural.

The at least one spacer element (24) can have various shape. It is, however, preferred that each spacer element (24) has at least two flat surfaces on opposing sides to be joined to the flat surfaces (22.1, 23.1) of the first and second construction board (22,23). For example, spacer elements (24) can be in the form of a cube or a quader. It is also possible that the spacer element (24) is a honeycomb structure.

It is possible, that the at least one spacer element (24) comprises voids. Voids can be preferred to save weight. In cases where any spacer element (24) comprises voids, it is preferred that such voids are additionally filled with the mineral foam of the present invention. Of course, this is only possible where such voids are still accessible after the spacer element (24) is joined with the first and second construction board (22,23), or where such voids are filled prior to the joining.

Of course, the dimensions of the at least one spacer element (24) is limited by the dimensions of the sandwich panel (21).

It is possible, and typically preferred, that a sandwich panel (21) of the present invention comprises two or more spacer elements (24). Preferably, all spacer elements (24) are of the same type. Where two spacer elements (24.1, 24.2) are used, it is preferred that such spacer elements (24.1, 24.2) are arranged parallel to each other and are forming the sides of the sandwich panel (21).

The at least one spacer element (24) is joined with the first and second construction board (22,23) in a way to form a cavity (25). Thereby, the cavity (25) is delimited by a first surface (22.1) of a first construction board (22), a second surface (23.1) of a second construction board (23), and a at least one third surface (24a) of at least one spacer element (24). This means that where only one spacer element (24.1) is used, the cavity (25) formed is open to three sides. Where two spacer elements (24.1, 24.2) are used, the cavity (25) preferably is open to two sides. Where more than two spacer elements (24) are used, preferably the spacer elements (24) are arranged in a way to form two or more cavities (25) that are open to two sides.

According to a particularly preferred embodiment, the sandwich panel (21) comprises a first construction board (22), a second construction board (23), and two spacer elements (24.1, 24.2), whereby a first surface (22.1) of the first construction board (22), a second surface (23.1) of the second construction board (23), a third surface (24a) of the first spacer element (24.1), and a fourth surface (24b) of the second spacer element (24.1) delimit a cavity (25), whereby said first surface (22.1) and said second surface (23.1) are arranged plane parallel with each other, and whereby the first construction board (22), the second construction board (23), and the two spacer elements (24.1, 24.2) are bonded with an adhesive. Very preferably, also the two spacer elements (24.1, 24.2) are arranged parallel with each other.

In step (ii) of a method of the present invention, the cavity (25) is completely filled with a mineral foam. Where more than one cavity (25) is formed, it is highly preferred that all cavities (25) are completely filled with mineral foam.

Mineral foams are based on mineral binders and contain a gas-filled cell structure.

Mineral binders are inorganic materials that can react with water to form water insoluble hydrate phases. According to embodiments, mineral binders are selected from cements, pozzolanes, latent hydraulic materials, lime, calcium sulfate, or mixtures thereof.

Cements preferably are selected from Portland cements according to according to standard EN 197-1:2011, alumina cement, especially alumina cement according to standard EN 14647:2005, calcium sulphoaluminate cement, or mixtures thereof.

Pozzolanes and latent hydraulic binders preferably are selected from slag, especially blast furnace slag or basic oxygen slag, clay, calcined clay, especially metakaolin, kiln dust, microsilica, fly ash, pyrogenic silica, precipitated silica, silica fume, zeolite, rice husk ash, burnt oil shale, natural pozzolane such as pumice and trass, or mixtures thereof.

Lime is preferably selected from natural hydraulic lime, formulated lime, hydraulic lime, and air lime according to standard EN 459-1:2015.

Calcium sulfate preferably is selected from anhydrite, calcium sulfate hemihydrate, calcium sulfate dihydrate, gypsum, or mixtures thereof.

Mineral foams can be present in a wet form. Wet mineral foams contain a significant amount of water, and typically the mineral binder is not cured or not fully cured.

Mineral foams can be present in a dry form. Dry mineral foams contain no water or small amounts of water, and the mineral binder is at least partly, especially fully cured. Water present in particular is water adsorbed to cured mineral surface of cell walls. Typically, a dry mineral foam is obtained from a wet mineral foam when mineral binders react with water and cure and/or water evaporates.

It is possible, in a method of the present invention, that in step (ii) the cavity (25) is filled
(a) by insertion of at least one element of pre-cured dry mineral foam, or
(b) by introduction of a pre-mixed, wet mineral foam, or
(c) by introduction of an aqueous slurry of a mineral binder and a blowing agent into the cavity (25), followed by expansion of the aqueous slurry to produce a mineral-foam.

The expression "pre-cured" means that the dry mineral foam was prepared and cured before being inserted into the cavity (25), for example in a mold. The expression "pre-mixed" means that the wet mineral foam is prepared before being inserted into the cavity (25), for example by means of a foam generator.

In particular, where an aqueous slurry of a mineral binder and a blowing agent is introduced into the cavity (25), followed by expansion of the aqueous slurry to produce a mineral-foam, it is possible to calculate the amount introduced and the expansion so that the cavity (25) is completely filled without any excess. It is also possible to remove any excess mineral foam while still in the uncured form, for example by way of a spatula, or in the cured form, for example by way of grinding.

According to preferred embodiments, in a method of the present invention, the mineral foam is obtained by chemical foaming and/or mechanical foaming of an aqueous slurry of a mineral binder, preferably by chemical foaming with a blowing agent.

Mineral binders are as described above, especially preferred are Portland cements, aluminate cements, and/or calcium sulfoaluminate cements.

Blowing agents are materials which evaporate, decompose or react with water and/or an acid, so as to liberate a gas. Non-limiting examples of blowing agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide, isocyanates, carbonates and bicarbonates, such as CaCOs, Na₂CO₃, and NaHCOs, which are preferably used in combination with an acid, e.g., a mineral acid, metal powders, such as aluminum powder, azides, such as methyl azide, hydrazides, such as p- toluenesulfonylhydrazide, and hydrazine.

A very preferred blowing agent within the present context is hydrogen peroxide, especially hydrogen peroxide in aqueous solution.

Chemical foaming can be facilitated by the use of a catalyst. Suitable catalysts preferably comprise Mn²⁺, Mn⁴⁺, Mn⁷⁺, or Fe³⁺ cations. Alternatively, the enzyme catalase may be used as catalyst. Non-limiting examples of suitable catalysts are MnO₂ and KMnO₄. Such catalysts are preferably used in combination with peroxide blowing agents.

According to preferred in a method of the present invention, the aqueous slurry of mineral binder comprises:
(i) at least one mineral binder selected from cement, pozzolane, and/or latent hydraulic binder,
(ii) water,
(iii) a salt of manganese or iron,
(iv) inorganic particles, and
the blowing agent is selected from hydrogen peroxide.

Inorganic particles within the present context are selected from the group consisting of oxides, including pure and mixed metal oxides, especially aluminum oxide, silicon dioxide, spinels, cerium-gadolinium oxide, zirconium oxide, magnesium oxide, tin oxide, titanium oxide and cerium oxide; hydroxides, especially aluminum hydroxide, calcium hydroxide, magnesium hydroxide; carbides, especially silicon carbide, boron carbide; nitrides, especially silicon nitride, boron nitride); phosphates, especially calcium phosphates, hydroxyapatite; carbonates, especially nickel carbonate, calcium carbonate including ground limestone or precipitated calcium carbonate, magnesium carbonate); silicates, especially silicon dioxide, silica fume, fly ash, quartz, ground glasses, slag, calcium silicates, mullite, cordierite, clay minerals like kaolin or bentonite, zirconium silicate, zeolites, diatomaceous earth; sulfates. It has to be understood that the inorganic particles as exemplified hereinabove are not identical to the mineral binders described above.

Preferably, the inorganic particles are selected from carbonates and/or oxides. Preferred oxides include pure and mixed metal oxides, selected from the group consisting of aluminum oxides (including Al-Mg spinels), silicon dioxides, zirconium dioxides, and zinc oxides, particularly aluminum oxide, silicon dioxide, and zirconium dioxide. A preferred carbonate is calcium carbonate.

The particle size of the inorganic particles may vary within a broad range. According to embodiments, the median particle size D50 of the inorganic particles is between 30 nm and 300 µm, preferably between 100 nm and 250 µm, more preferably between 200 nm and 150 µm, even more preferably between 500 nm and 100 µm. In a further embodiment, the median particle size D50 of the inorganic particles is between 100 nm and 10 µm, preferably 100 nm and 2 µm. It was found that the particle size distribution is of less importance. Good foams can be obtained with narrow as well as with broad particle size distributions.

The median particle size D50 refers to the diameter of a particle distribution, wherein 50 % of the particles have a smaller diameter. The median particle size D50 can be measured by laser diffraction or dynamic light scattering (DLS) methods. According to the present invention dynamic light scattering (DLS) according to ISO 22412:2008 is preferably used. In the present invention the particles to be characterized were dispersed in a liquid, preferably water or ethanol. In context of the present invention, the D50 value refers to a number distribution.

It is particularly preferred that the inorganic particles of the present invention are surface modified with amphiphilic molecules. Surface modification in this context means that the amphiphilic compounds are adsorbed on the inorganic particle's surface. This leads to particularly effective stabilization of the mineral foam.

The term "amphiphilic compound" is known in the art and relates to organic compounds having an apolar part (also identified as tail or group R) and a polar part (also identified as head group). Accordingly, suitable amphiphilic molecules contain a tail coupled to a head group, typically by covalent bonds. Such amphiphilic molecules typically contain one tail and one head group but may also contain more than one head group.

Suitable amphiphilic compounds can be selected form non-ionic, anionic, cationic, or zwitterionic compounds as well as proteins or mixtures thereof. Particularly suitable are C8-C18-alkyl sulfates, C8-C18-alkyl ether sulfates, C8-C18-alkyl sulfonates, C8-C18-alkyl benzene sulfonates, C8-C18-α-olefin sulfonates, C8-C18-sulfosuccinates, α-sulfo-C8-C18-fatty acid salts, C8-C18-fatty acid salts, C8-C18-fatty alcohol ethoxylates, block copolymers of ethylene oxide and propylene oxide, C8-C18-alkyl polyglycosides, alkyltriammonium salts, alkylbenzyldimethylammonium salts, alkylpyridinium salts, cocamidopropyl betaine, lauramidopropyl betaine, keratin, hydrolyzed keratin, collagen, hydrolyzed collagen, or soy-based proteins.

Such mineral foams have particularly advantageous properties when fully cured. In particular such mineral foams are non-flammable, have a low thermal conductivity, have a sufficient mechanical strength, and have a low density.

A low thermal conductivity within the present context is a thermal conductivity of not more than 50 mW/m*K, preferably not more than 40 mW/m*K, more preferably not more than 35 mW/m*K, measured according to DIN EN 12667:2001-05.

The expression "sufficient mechanical strength" within the present context especially means that the compressive strength is at least 5 kPa, preferably is at least 10 kPa, more preferably at least 20 kPa, measured according to standard DIN EN 826:2013-05.

A mineral foam of the present invention preferably develops a sufficient mechanical strength in short time. This is because, especially in industrialized prefabricated construction, sandwich panels are often moved and/or are further processed immediately after production, i.e. when curing of the mineral foam is not complete. This means that the mineral foam must not collapse as a result of movements and/or vibrations. Therefore it is preferred that a mineral foam of the present invention obtains a sufficient mechanical strength within 1 hour, preferably within 30 minutes, more preferably within 10 minutes, especially within 3 minutes.

A mineral foam of the present invention in particular is stable enough in a not fully cured state so that further processing, such as moving or vibrating, of freshly manufactured sandwich panels (21) of the present invention is possible within short time after filling of the cavity (25) with mineral foam without the mineral foam collapsing. A short time in this context means not more than 1 hour, preferably not more than 30 minutes, more preferably not more than 10 minutes, especially not more than 3 minutes.

A low density within the present context is a density of between 10 - 2000 g/L, preferably between 20 - 1000 g/L, more preferably between 50 - 400 g/L, still more preferably between 70 - 300 g/L.

The first construction board (22), the second construction board (23), and the at least one spacer element (24) are joined together with an adhesive to delimit a cavity (25). Normally, the mineral foam of the present invention is not bonded to the first construction board (22), the second construction board (23), or the at least one spacer element (24).

The adhesive used to bond the first construction board (22), the second construction board (23), and the at least one spacer element (24) is not particularly limited.

Suitable adhesives are all adhesives, preferably all curable adhesives, commonly used in bonding processes. The term "curable" requires that the adhesive cures irreversibly by chemical reactions and is not simply a thermoplastic melt composition that can be re-liquified for example by applying heat. Curable adhesives inter alia have the advantage of lower creep when exposed to elevated temperatures. Preferably, the curable adhesive composition is selected from the group consisting of moisture-curable compositions, heat-curable compositions, two-component curable compositions, curable hotmelt compositions, oxidation-curable compositions, and radiation-curable compositions.

Preferred curable adhesives that cure by reaction with moisture either from air or otherwise introduced include RTV-1 or RTV-2 silicones, compositions based on silane-functional polyurethanes, one-component polyurethanes.

Preferred curable adhesives that cure by applying heat include HTV-silicones, heat-curing polyurethanes or polyureas, reactive hotmelt compositions based on polyurethanes or silane-functional polyurethanes, heat-curing acrylate compositions, and single-component or two-component epoxy compositions.

Preferred adhesives that cure after mixing of two components with mutually reactive constituents include RTV-2 silicones, two-component polyurethanes or polyureas, two-component silane-functional polyurethanes, or two-component epoxy compositions.

Preferred further adhesives that have other curing mechanisms or a combination of curing mechanisms are oxidation-curable, radiation-curable, or radical-curable compositions such as acrylate compositions, polysulfides, or hybrid compositions using the above described or similar curing chemistries.

According to preferred embodiments, the adhesive is selected from an adhesive comprising an organic reactive resin, especially the adhesive is selected from polyurethane adhesives, silane-functional polyurethane adhesives, epoxide adhesives, silicone adhesives, and acrylate adhesives.

Most preferred adhesives are two-component polyurethanes, moisture-curable polyurethanes that are optionally admixed with a water-containing second component, one-component or two-component silane-functional polyurethanes, one-component or two-component epoxy compositions, RTV-2 silicones, and heat-curing compositions based on silicones, polyurethanes, or epoxy resins.

It is preferred that the adhesive is not based on a mineral binder, especially is not a cementitious adhesive. However, the adhesive may contain a small amount of mineral binder in combination with an organic reactive resin, wherein the organic reactive resin is the main binder.

According to embodiments, in a method of the present invention, the adhesive is applied to the first surface (22.1) of the first construction board (22) and/or to the surface of the at least one spacer element (24) intended to be in contact with said first surface (22.1), and to the second surface (23.1) of the second construction board (23) and/or to the at least one surface of the at least one spacer element (24) intended to be in contact with said first surface (23.1). Subsequently, the first construction board (22), the second construction board (23), and the at least one spacer element (24) are joined to delimit a cavity (25), whereby adhesive is present at the interface between the first construction board (22) and the spacer element (24) and at the interface between the second construction board (23) and the spacer element (24). The adhesive is then cured.

Alternatively, the first construction board (22), the second construction board (23), and the at least one spacer element (24) may also be assembled to delimit a cavity (25) prior to application of an adhesive. The adhesive is then applied to joints of the assembly of first construction board (22), second construction board (23), and at least one spacer element (24) and subsequently is allowed to cure.

In another aspect, the present invention relates to a sandwich panel (21) obtainable by a method as described above.

All features and embodiments as described above also relate to this aspect.

In another aspect, the present invention relates to the use of a sandwich panel (21) as described above as a thermal insulation panel, an acoustic insulation panel, a fire protection panel, and/or a cover board, or as part of a thermal insulation system, acoustic insulation system, and/or fire protection system, or as a wall element in buildings.

All features and embodiments as described above also relate to this aspect.

In particular, sandwich panels (21) of the present invention can be used in products or systems for passive fire protection conforming to standard EAD 350454-00-1104:2017 and/or to classesA1 orA2 according to standard DIN EN 13501-1:2019-05.

According to embodiments, sandwich panels (21) of the present invention may be used in horizontal or in vertical applications, for example load-bearing structures or non-load bearing structures, foundations, walls, façades, roofs, ceilings, and/or floors.

Very preferred uses are thermal and/or acoustic insulation of drywall, in particular prefabricated drywall, in buildings.

The term "drywall" refers to a constructive wall, e.g. used for room partitioning purposes, especially for an interior area. The term "dry wall" also encompasses a ceiling.

In particular, a sandwich panel (21) of the present invention can be used in a method for producing a drywall comprising a supporting framework and at least one sandwich panel (21), said method comprising the steps of:
a) providing and/or obtaining a supporting framework,
b) providing and/or obtaining at least one sandwich panel (21),
c) applying an adhesive to the supporting framework and/or the sandwich panel (21); and
d) placing the sandwich panel (21) onto the supporting framework, such that the sandwich panel (21) and the supporting framework are connected to each other by the adhesive to obtain a bonded composite.

In particular, the adhesive is as described above. It is preferred that a green strength of the adhesive is such that a structure of the bonded composite remains essentially intact when the bonded composite is lifted at the supporting framework and/or at the sandwich panel (21) immediately after step d).

In case where two or more sandwich panels (21) are used, the sandwich panels (21) abut on each other with their edges to form a continuous area on the supporting framework. In such case, sandwich panels (21) may additionally be bonded by an adhesive as described above.

Bonding by an adhesive has the advantage that the sandwich panel (21) is not penetrated for bonding it to the supporting framework. Especially, there are no form and/or force-fit connection elements, in particular no nails and/or screws. Forces are thus transmitted through the whole joint and not only though single connection points. This leads to less cracking. Additionally, dilatation of different materials, for example due to different thermal expansion, can be tolerated.

In particular, where a sandwich panel (21) as described above is used for acoustic insulation, the mineral foam has a density of at least 300 g/L, preferably between 300 - 2000 g/L, more preferably between 400 - 1000 g/L.

In particular, where a sandwich panel (21) as described above is used for thermal insulation, the mineral foam has a density of 10 - 200 g/L, preferably 50 - 150 g/L.

In another aspect the present invention relates to a method for building a construction, said method comprising a step of bonding with an adhesive at least two sandwich panels (21) obtained by a method as described above.

All features and embodiments described for other aspects also apply to this aspect.

The term "building a construction" in particular refers to the building of a foundation, a wall, a façade, a roof, a ceiling, a floor, or any part thereof. According to a preferred embodiment, the construction is a drywall as described above.

Especially, where sandwich panels (21) are bonded by an adhesive and are installed to build a construction by an adhesive, the process of construction can be accelerated. This is especially the case where sandwich panels (21) and/or elements made therefrom can be transported directly after their assembly.

In particular, a sandwich panels (21) of the present invention have a higher resistance to flames or has improved non-flammable properties, as compared to a sandwich panel comprising a cavity filled with organic resins or with mineral wool. The present invention is in particular useful for fully or partially bonded sandwich panels in drywall construction. A method for building a construction preferably is a method of building a drywall construction.

In a method for building a construction, sandwich panels (21) of the present invention can be mounted on supports of wood, steel, or other materials. The mounting preferably is done by bonding the sandwich panels (21) and the support with an adhesive. However, fastening with nails or screws is possible in addition or alternatively, even though this is less preferred.

According to embodiments, the method of building a construction is a method of building a construction comprising a step of bonding with an adhesive at least two sandwich panels (21) of the present invention on a construction site. Thereby, preferably, individual sandwich panels (21) are pre-manufactured in an industrial environment, are transported to a construction site, and are then used on the construction site in a method to build a construction. In particular, a pre-manufactured construction is an assembly of at least one sandwich panel (21) on a supporting framework.

According to embodiments, the method of building a construction is a method of building a construction comprising a step of bonding with an adhesive at least two sandwich panels (21) of the present invention in an industrial or semi-industrial environment. Such method of building a construction is a method of prefabricated construction. This means that the respective construction is not built at its final destination but is pre-manufactured and then transported as a whole to the ultimate construction site.

It can be preferred, in a method of building a construction, to pour or to inject a pre-mixed, wet mineral foam, or an aqueous slurry of a mineral binder and a blowing agent into the cavity (25) of a sandwich panel (21) of the present invention. Thereby, it is possible to completely fill the cavity (25) with mineral foam. Connections, pipes or boxes embedded in the construction, for example the drywall, are completely encapsulated in mineral foam. In particular, there is no need to cut prefabricated sandwich panels.

In another aspect, the present invention relates to a building, in particular a foundation, a wall, a façade, a roof, a ceiling, or a floor, comprising at least two sandwich panels (21) obtained by a method as described above, whereby the at least two sandwich panels (21) are bonded with an adhesive.

All features and embodiments described for other aspects also apply to this aspect.

### Figures

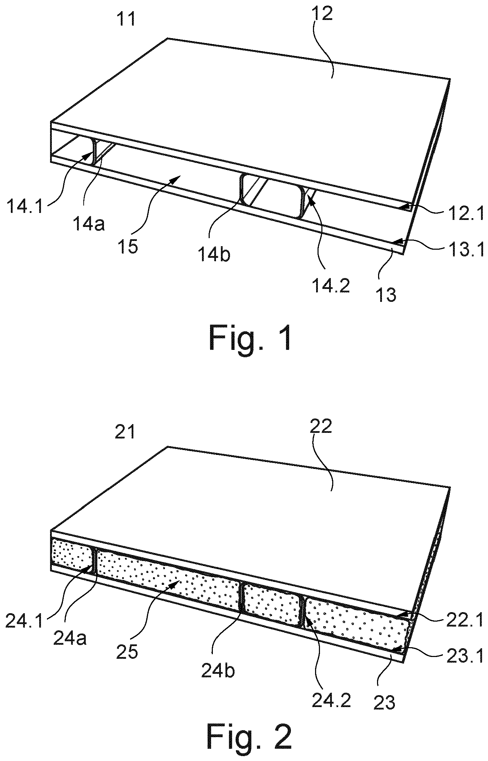

- Figure 1: Figure 1 is a schematic view of a sandwich panel (11) without mineral foam. Therein, a cavity (15) is delimited by a first surface (12.1) of a first construction board (12), a second surface (13.1) of a second construction board (13), a third surface (14a) of a first spacer element (14.1) and a fourth surface (14b) of a second spacer element (14.2).
- Figure 2: Figure 2 is a schematic view of a sandwich panel (21) of the present invention. Therein, a cavity (25) is delimited by a first surface (22.1) of a first construction board (22), a second surface (23.1) of a second construction board (23), a third surface (24a) of a first spacer element (24.1) and a fourth surface (24b) of a second spacer element (24.2). The cavity (25) as well as all further cavities being filled with a mineral foam.

### Examples

### Production Example 1

Pre-cured mineral foam was obtained as follows. First, 6.5 g of a mixture of 88.5 w% calcium carbonate (Schäfer Precarb 100), 5.8 w% enanthic acid, and 5.7 w% manganese (IV) oxide was dispersed in 38.7 g of water. Then, 39.4 g of calcium sulfoaluminate cement, 12.2. g of calcium sulfate dihydrate, and 0.3 g of PAN fibers (6mm, 6.7 dtex) were added to the aqueous dispersion. After 15 minutes of stirring, the foaming was initiated by addition of 2.9 g of hydrogen peroxide (50% aqueous solution). The slurry obtained was poured into a mold and left until complete expansion. The green foam was stored for 16 hours at 23°C/70% r.h. Thereafter, the foam was demolded and dried at 70°C until constant mass. The pre-cured mineral foam thus obtained had a dry density of 98.6 kg/m³, a compressive strength of 29.8 kPa (measured according to standard DIN EN 826:2013-05), and a thermal conductivity of 38.6 mW/m*K (measured according to standard DIN EN 12667:2001-05). It was used as obtained to prepare sandwich panels (21).

### Production Example 2

Sandwich panels (21) as shown in figure 2 were produced from two cement fiber boards (22,23) arranged plane parallel and with spacer elements (24.1, 24.2) made of steel. The fiber cement boards (22,23) and steel spacers (24.1, 24.2) were bonded together with a silane-functional polyurethane adhesive (Sikaflex^{®}-545, available from Sika Deutschland GmbH). The cavities (25) obtained were either left empty or were completely filled by insertion of mineral wool (Sonorock 40, available from Deutsche Rockwool GmbH) or were completely filled by insertion of pre-cured mineral foam obtained as described in Production Example 1. Two panels were bonded together with the same silane-functional polyurethane adhesive and joints were filled with a cement-based joint filler (Schönox RDF, available from Sika Deutschland GmbH).

### Production example 3

Sandwich panels (21) were produced in the same way as described in production Example 2 with the following differences: plasterboards (22,23) were used instead of fiber boards, and spacer elements (24.1, 24.2) made of wood were used instead of steel spacers.

### Test Example 1

Sandwich panels (21) as prepared in Production Example 2 and 3 were inserted into the side wall of an oven. Thereby, an outer side (cold, facing outside of the oven) and an inner side (hot, facing inside of the oven) of the sandwich panel was defined. The outer side was equipped with sensors to measure the temperature (PT 1000 sensor). The oven was heated to 1000°C within 60 minutes. The following table 1 shows the results.

**Table 1: results of exposure to heat of sandwich panels**

| Test | Sandwich panel | Panel filling | Time to reach 180 °C on the cold side |
|---|---|---|---|
| 1* | Production example 1 | None | 60 min |
| 2* | Production example 1 | Mineral wool | 85 min |
| 3 | Production example 1 | Pre-cured mineral foam | Not reached within 90 min |
| 4* | Production example 2 | None | 35 min, sample in flames |
| 5* | Production example 2 | Mineral wool | 57 min |
| 6 | Production example 2 | Pre-cured mineral foam | 90 min |

| | | | |
|---|---|---|---|
| *not according to the invention | | | |

It can be seen from the results in table 1, that sandwich panels (21) of the present invention take significantly longer time to reach to the threshold value of 180°C of the outer side (cold side). The inventive sandwich panel (21) used for test 3 did not even reach to that temperature on the cold side after the maximum time of 90 min allowed for the test. This shows that sandwich panels (21) of the present invention are non-flammable and provide efficient fire protection.

## Claims

1. A method for the manufacture of a sandwich panel (21), said method comprising the steps of
(i) forming at least one cavity (25) delimited by a first surface (22.1) of a first construction board (22), a second surface (23.1) of a second construction board (23), and a at least one third surface (24a) of at least one spacer element (24.1), whereby the at least one cavity (25) is formed by joining the first construction board (22), the second construction board (23), and the at least one spacer element (24.1) with an adhesive, and
(ii) completely filling the at least one cavity (25) formed with a mineral foam.

2. The method as claimed in any of the preceding claims, **characterized in that** the first construction board (22) and second construction board (23) are arranged such that said first surface (22.1) and said second surface (23.1) are arranged plane parallel with each other.

3. The method as claimed in any of the preceding claims, **characterized in that** said first construction board (22) and second construction board (23) independently of each other are selected from metal boards, fiber cement boards, gypsum plasterboards, gypsum fiberboards, or wood boards.

4. The method as claimed in any of the preceding claims, **characterized in that** said mineral foam is obtained by chemical foaming and/or mechanical foaming of an aqueous slurry of a mineral binder, preferably by chemical foaming with a blowing agent.

5. The method as claimed in claim 4, **characterized in that** the aqueous slurry of mineral binder comprises:
(i) at least one mineral binder selected from cement, pozzolane, and/or latent hydraulic binder,
(ii) water,
(iii) a salt of manganese or iron,
(iv) an inorganic particle, and
wherein the blowing agent is selected from hydrogen peroxide.

6. The method as claimed in any of the preceding claims, **characterized in that** the adhesive is selected from an adhesive comprising an organic reactive resin, especially the adhesive is selected from polyurethane adhesives, silane-functional polyurethane adhesives, epoxide adhesives, silicone adhesives, and acrylate adhesives.

7. The method as claimed in any of the preceding claims, **characterized in that** in step (ii) the cavity (25) is filled
(a) by insertion of at least one element of pre-cured dry mineral foam, or
(b) by introduction of a pre-mixed, wet mineral foam, or
(c) by introduction of an aqueous slurry of a mineral binder and a blowing agent into the cavity (25), followed by expansion of the aqueous slurry to produce a mineral-foam.

8. A sandwich panel (21) obtainable by a method as claimed in any of the preceding claims.

9. A sandwich panel (21) as claimed in claim 8, **characterized in that** the mineral foam has a thermal conductivity of not more than 50 mW/m*K, preferably not more than 40 mW/m*K, more preferably not more than 35 mW/m*K, measured according to DIN EN 12667:2001-05.

10. A sandwich panel (21) as claimed in any of claims 8 or 9, **characterized in that** the mineral foam has a compressive strength of at least 5 kPa, preferably at least 10 kPa, more preferably at least 20 kPa, measured according to standard DIN EN 826:2013-05.

11. A sandwich panel (21) as claimed in any of claims 8 - 10, **characterized in that** the mineral foam has a density of between 10 - 2000 g/L, preferably between 20 - 1000 g/L, more preferably between 50 - 400 g/L, still more preferably between 70 - 300 g/L.

12. Use of a sandwich panel (21) as claimed in any of claims 8 - 11 as a thermal insulation panel, an acoustic insulation panel, a fire protection panel, and/or a cover board, or as part of a thermal insulation system, acoustic insulation system, and/or fire protection system, or as a wall element in buildings.

13. Use of a sandwich panel (21) as claimed in claim 12 for acoustic insulation, wherein the mineral foam has a density of at least 300 g/L, preferably between 300 - 2000 g/L, more preferably between 400 - 1000 g/L.

14. Use of a sandwich panel (21) as claimed in of claim 12 for thermal insulation, wherein the mineral foam has a density of 10 - 200 g/L, preferably 50 - 150 g/L.

15. A method for building a construction, said method comprising a step of bonding with an adhesive at least two sandwich panels (21) obtained by a method as claimed in any of the claims 1 - 7.

16. A building, in particular a foundation, a wall, a façade, a roof, a ceiling, or a floor, comprising at least two sandwich panels (21) obtained by a method as claimed in any of the claims 1 - 7, whereby the at least two sandwich panels (21) are bonded with an adhesive.
